# EUROPÄISCHE PATENTSCHRIFT

(11) **EP 2 477 295 B1**
(45) Veröffentlichungstag und Bekanntmachung des Hinweises auf die Patenterteilung: **18.02.2015**
(21) Anmeldenummer: 11009417.4
(22) Anmeldetag: 29.11.2011
(51) Int. Cl.: H02H 9/04, H02H 7/125

(54) **Verfahren zur Begrenzung einer Gleichrichterspannung und Schaltung hierfür**
Method for limiting a rectifier voltage and circuitry for the same
Procédé de limitation d'une tension de redresseur et circuit correspondant

(30) Priorität: 13.01.2011 DE 102011008540
(43) Veröffentlichungstag der Anmeldung: 18.07.2012
(73) Patentinhaber: G & P GmbH Ingenieur-Büro für Elektro- und Automatisierungstechnik, 59581 Warstein (DE)
(72) Erfinder: Gauseweg, Hubert, 59581 Warstein (DE)
(74) Vertreter: Schober, Mirko

(56) Entgegenhaltungen:
- DE-A1- 2 010 208
- GB-A- 1 242 673
- US-A- 5 038 244

## Beschreibung

Die Erfindung betrifft ein Verfahren zur Begrenzung einer Gleichrichterspannung und eine Schaltung hierfür nach dem Oberbegriff des Anspruchs 1.

Es ist bekannt, dass die Netzeinspeisung für Gleichrichter sogar innerhalb der Überwachungsgrenzen des Wechselspannungsnetzes Schwankungen unterworfen ist. Bei hoher Belastung sinkt die Netzspannung bis kurz vor die Überwachungsgrenze und steigt nach Entlastung des Netzes stark an, beides wird aber von der Überwachung auf der Wechselspannungsseite nicht erfasst, weil diese Schwankungen die Erfassungsgrenzen nicht erreichen. Trotzdem öffnet der angeschlossene Gleichrichter bei absinkender Netzspannung den Regler, um seine Ausgangsspannung stabil zu halten, da diese sonst ebenfalls absinken würde. Steigt die Netzspannung wieder an, kommt es vor, dass der Gleichrichter bei der geschilderten Kompensation in einem Moment den Regler voll aufgesteuert hat. Folglich gelangt eine zu große Ausgangsspannung auf die Gleichspannungsseite des Gleichrichters, die so groß ist, dass angeschlossene Verbraucher Schaden nehmen können

Eine Schaltung gemäss dem einleitenden Teil des Anspruchs 1 ist aus der Offenlegungsschrift DE 2010208 bekannt. Eine weitere Schutzschaltung der Gleichspannungsseite eines Gleichrichters is aus der GB1242673 bekannt.

Aufgabe der vorliegenden Erfindung ist es daher, eine Schaltung und ein Verfahren anzugeben, mit denen dieser Effekt vermieden wird.

Gelöst wird diese Aufgabe durch eine Schaltung mit den Merkmalen des Anspruchs 1 sowie ein Verfahren mit den Merkmalen des Anspruchs 6. Vorteilhafte Ausführungsformen oder Varianten finden sich in den jeweiligen Unteransprüchen.

Erfindungsgemäß ist vorgesehen, zwischen den positiven und negativen Pfaden auf der Gleichspannungsseite temporär einen Stromfluss zu erzeugen, der die überschüssige Ladung bzw. die Überspannung abführt. Dazu wird über einen ersten Schalter, bevorzugt einen ersten Thyristor, ein Stromfluss in Richtung des negativen Pfades erzeugt, falls die Ausgangsspannung des Gleichrichters (Gleichrichterspannung) einen vorgegebenen (oberen) Wert erreicht oder übersteigt. Hinter den Schalter ist eine Parallelschaltung aus einem Kondensator und einem Widerstand geschaltet. Wird der erste Schalter geöffnet, also ein Stromfluss ermöglicht, so fließt ein durch die hohe Spannung verursachter hoher Strom in den Kondensator und lädt diesen auf, wobei dieser jedoch sogleich wieder über den Widerstand entladen wird. Eine Überspannung wird dadurch abgebaut. Der erste Schalter wird dann wieder geschlossen, also der Stromfluss unterbrochen, wenn eine vorgegebene Zeitspanne seit dem Einschalten verstrichen ist oder ein gewisser vorgegebener (unterer) Wert der Spannung erreicht oder unterschritten wird. Nach Schließen des ersten Schalters herrscht wieder Normalbetrieb.

Bevorzugt ist vorgesehen, dass ein Kommutierungsthyristor zum Schließen des ersten Schalters vorgesehen ist. Beide Thyristoren oder Schalter werden über eine Steuerung geschaltet, in der die vorgegebenen Zeit- und/oder Spannungswerte eingestellt sind.

Bevorzugt sind der erste und zweite Schalter Thyristoren, wobei der erste Schalter ein erster Thyristor ist, dessen Anode mit dem positiven Pfad und dessen Kathode über die Parallelschaltung aus dem ersten Kondensator und dem Widerstand mit dem negativen Pfad verbunden ist. Parallel zum ersten Schalter sind bevorzugt in Serie ein zweiter Kondensator und ein zweiter Schalter geschaltet. Der zweite Schalter ist zur Abschaltung des ersten Schalters geschaltet. Die als Thyristoren ausgebildeten ersten und/oder zweiten Schalter werden bevorzugt über eine Steuerung gezündet, wobei die Steuerung zur Zündung der Thyristoren vorgegebene Spannungs- oder Zeitwerte erhalten oder aufweisen kann.

Bevorzugt ist der zweite Schalter ein zweiter Thyristor, dessen Anode mit dem zweiten Kondensator verbunden ist.

Weiter betrifft die Erfindung ein Verfahren zur Begrenzung der von einem Gleichrichter auf dessen Gleichspannungsseite erzeugten Gleichrichterspannung. Bei diesem Verfahren wird die Gleichrichterspannung erfasst und mit einem vorgegebenen Spannungswert (UL) verglichen. Weiter ist das Öffnen eines den positiven Pfad und den negativen Pfad auf der Gleichspannungsseite verbindenden Strompfades vorgesehen, also ein Stromfluss durch/über den Pfad erlaubt, falls die Gleichrichterspannung dem vorgegebenen Wert entspricht oder diesen übersteigt. Dadurch wird ein in den geöffneten Strompfad geschalteter Kondensator bis auf die Gleichrichterspannung aufgeladen und sogleich über einen Ableitwiderstand entladen. Der geöffnete Strompfad durch den ersten Schalter wird geschlossen, wenn die Gleichrichterspannung einen zweiten vorgegebenen unteren Wert erreicht oder unterschreitet oder wenn nach dem Öffnen des Strompfades eine vorgegebene Zeitspanne vergangen ist.

Die Erfindung wird nachfolgend anhand der Figuren 1 bis 3 schematisch näher erläutert.
- Figur 1 -: zeigt eine erfindungsgemäße Schaltung,
- Figur 2 -: zeigt einen Teil der erfindungsemäßen Schaltung mit Steuerung,
- Figur 3 -: zeigt ein Spannungs-Zeit-Diagramm, das einen schematischen Spannungsverlauf der Ausgangsspannung des Gleichrichters zeigt.

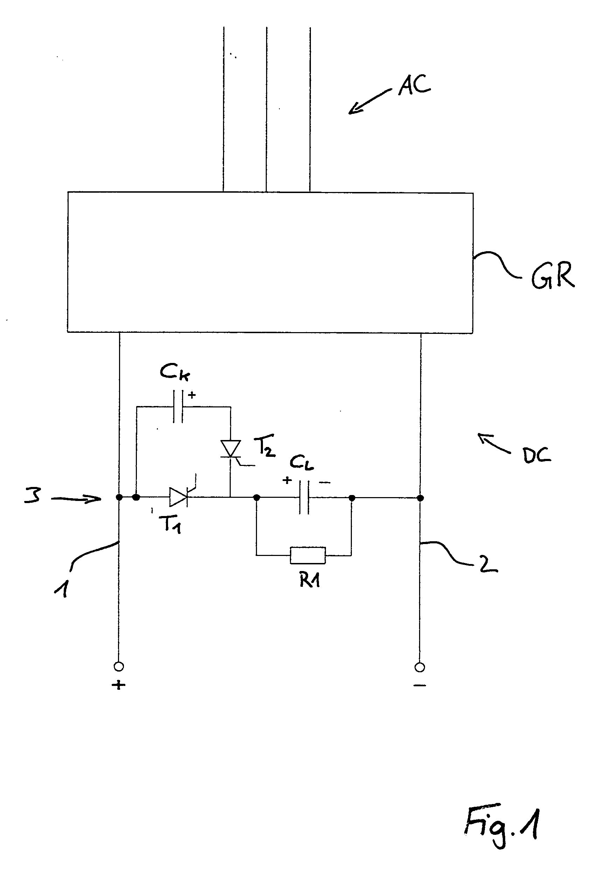

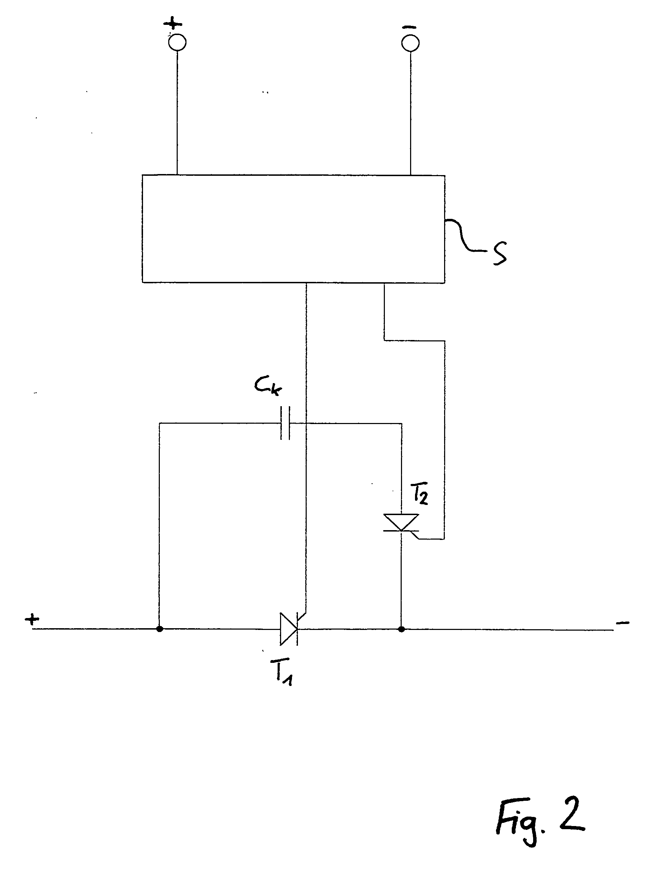

Die in Figur 1 und Figur 2 gezeigte Schaltung befindet sich auf der Gleichspannungsseite DC des Gleichrichters GR, die Netzseite des Gleichrichters GR ist mit AC bezeichnet. Der Gleichrichter gibt eine Ausgangsspannung aus, die im Folgenden als Gleichrichterspannung Ugr bezeichnet wird und an den Anschlüssen + und - des ersten (positiven) Pfades 1 bzw. des zweiten (negativen) Pfades 2 anliegt. Zwischen dem ersten Pfad 1 und dem zweiten Pfad 2 ist ein schaltbarer Strompfad 3 vorgesehen. Der Strompfad 3 umfasst einen ersten Schalter T1, der im gezeigten Beispiel ein Thyristor ist, und in Serie dazu einen ersten Kondensator CL und einen zu diesem Kondensator CL parallel geschalteten Widerstand R1, so dass über den Strompfad 3 bei auf Durchlass geschaltetem Schalter T1 ein Strom zwischen dem ersten Pfad 1 und dem zweiten Pfad 2 fließen kann.

Im gezeigten Beispiel ist ein zweiter Schalter T2, der hier wiederum als Thyristor dargestellt ist, in Serie mit einem zweiten Kondensator Ck parallel zum ersten Thyristor T1 geschaltet. Der zweite Thyristor T2 ist ein Kommutierungsthyristor und dient dazu, den ersten Thyristor T1 wieder auszuschalten bzw. den Durchgang durch diesen zu schließen.

Das Schalten der Thyristoren oder Schalter T1 und T2 wird durch eine Steuerung S bewirkt, die in Figur 2 schematisch dargestellt ist. In der Steuerung sind Werte oder Ereignisse vorgegeben, bei denen das Schalten der Thyristoren T1 und T2 erfolgen soll.

Die Schaltung wird ausgelöst, wenn eine Spannung auf der Gleichspannungsseite DC anliegt, die gleich oder höher ist als ein vorgegebener Maximalwert UL. Erreicht die Gleichrichterspannung Ugr diesen Wert UL, so schaltet die Steuerung S den Thyristor 1 auf Durchlass. Die Überspannung lädt den Kondensator CL auf und es kommt zu einem hohen Stromfluss durch den Pfad 3. Über den Widerstand R1 wird der Kondensator CL jedoch sofort wieder in Richtung des Pfades 2 entladen und die Überspannung abgebaut. In diesem Moment wird dann der Thyristor T2 gezündet. Über den zuvor mit einer angemessenen Spannung von extern aufgeladenen Kondensator Ck fließt ein Strom durch T2. Hierdurch wird der Thyristor T1 abgeschaltet und das System befindet sich im normalen Betriebszustand. Das Zünden des Thyristors T2 kann entweder nach einem vorgegebenen Zeitinterwall Dt nach dem Zünden des Thyristors T1 erfolgen oder vor dem Absinken der Gleichrichterspannung Ugr auf oder unter einen vorgegebenen Spannungswert. Im Regelfall ist das Absinken der Gleichrichterspannung nach unten durch die Leerlaufspannung UBatt der angschlossenen Notversorgungsbatterie begrenzt.

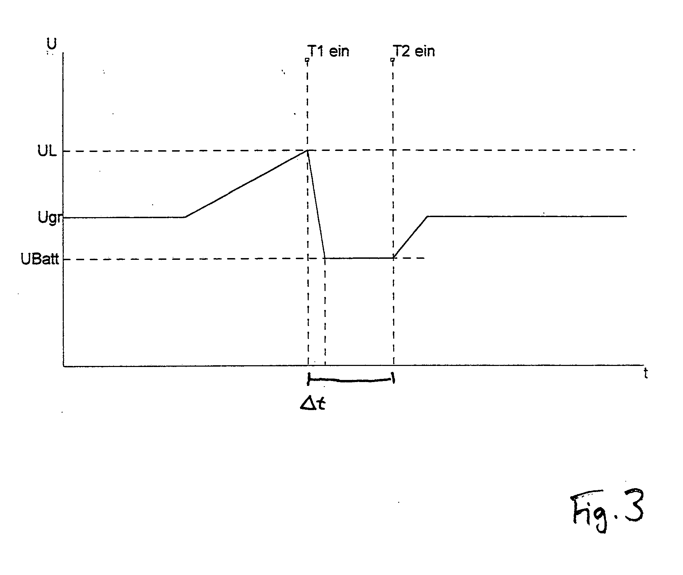

Der zeitliche Verlauf der Gleichrichterspannung Ugr ist in der Figur 3 dargestellt. Die Gleichrichterspannung Ugr steigt in Folge eines aufregelnden Gleichrichters GR an, bis die vorgegebene Maximalspannung UL erreicht ist. Die elektronische Erfassung detektiert dies und zündet den Thyristor T1 durch die Steuerung S (erste senkrecht gestrichelte Linie). Da der Kondensator CL nach seinem spontanen Aufladen sogleich entladen wird, sinkt die Gleichrichterspannung Ugr wieder ab auf einen Wert, der in der Regel über oder bei der Leerlaufspannung der Notversorgungsbatterie liegt. Nach einer vorgegebenen Zeitdauer Dt oder spätestens bei Erreichen der Spannung UBatt wird der Thyristor T2 gezündet (dritte senkrechte gestrichelte Linie) und unterbricht den Stromfluss durch T1. Die Gleichrichterspannung Ugr steigt ggf. wieder an und das System befindet sich im Normalbetrieb.

## Patentansprüche

1. Schaltung mit einem Gleichrichter (GR) mit einer Netzseite (AC) und einer Gleichspannungsseite (DC) mit einem positiven Pfad (1) und einem zweiten negativen Pfad (2), die jeweils einen Anschluss aufweisen, zwischen denen eine Last anschließbar und mit einer durch den Gleichrichter (GR) erzeugten Gleichrichterspannung (Ugr) gespeist werden kann,
wobei zwischen den Pfaden (1; 2) ein erster Schalter (T1) in Serie mit einer Parallelschaltung aus einem ersten Kondensator (CL) und einem Widerstand (R1) vorgesehen ist, so dass der erste Kondensator (CL) beim Einschalten des ersten Schalters (T1) geladen und über den Widerstand (R1) entladen wird, wobei eine Steuerung (S) für den ersten Schalter (T1) vorgesehen ist, welche den ersten Schalter (T1) einschaltet, wenn die Gleichrichterspannung (Ugr) einen ersten vorgegebenen oberen Wert (UL) erreicht oder übersteigt und den ersten Schalter (T1) ausschaltet, wenn die Gleichrichterspannung (Ugr) einen zweiten vorgegebenen unteren Wert erreicht oder unterschreitet oder wenn nach dem Einschalten eine vorgegebene Zeitspanne (Dt) vergangen ist, wobei der erste Schalter (T1) ein erster Thyristor ist, dessen Anode mit dem positiven Pfad (1) und dessen Kathode über die Parallelschaltung aus dem ersten Kondensator (CL) und dem Widerstand (R1) mit dem negativen Pfad (2) verbunden ist, **dadurch gekennzeichnet, dass** parallel zum ersten Schalter (T1), in Serie, ein zweiter Kondensator (Ck) und ein zweiter Schalter (T2) geschaltet sind, wobei der zweite Schalter (T2) zur Abschaltung des ersten Schalters (T1) geschaltet ist.

2. Schaltung nach Anspruch 1,
**dadurch gekennzeichnet,**
**dass** der erste oder/und der zweite Schalter über die Steuerung (S) schaltbar ist.

3. Schaltung nach einem der Ansprüche 1 oder 2,
**dadurch gekennzeichnet,**
**dass** der zweite Schalter (T2) ein zweiter Thyristor ist, dessen Anode mit dem zweiten Kondensator (Ck) verbunden ist.

4. Verfahren zur Begrenzung der von einem Gleichrichter (GR) auf dessen Gleichspannungsseite (DC) erzeugten Gleichrichterspannung (Ugr) mit folgenden Schritten:
- Erfassen der Gleichrichterspannung (Ugr),
- Vergleichen der Gleichrichterspannung (Ugr) mit einem vorgegebenen Spannungswert (UL),
- Öffnen eines den positiven Pfad (1) und den negativen Pfad (2) auf der Gleichspannungsseite (DC) verbindenden Strompfades (3), falls die Gleichrichterspannung (Ugr) dem vorgegebenen Wert entspricht oder diesen übersteigt, wodurch ein in den geöffneten Strompfad (3) geschalteter Kondensator (CL) bis auf die Gleichrichterspannung (Ugr) aufgeladen und sogleich über einen Ableitwiderstand (R1) entladen wird,
- Schließen des geöffneten Strompfades (3), wenn die Gleichrichterspannung (Ugr) einen zweiten vorgegebenen unteren Wert erreicht oder unterschreitet oder wenn nach dem Öffnen des Strompfades (3) eine vorgegebene Zeitspanne (Dt) vergangen ist, wobei zum Öffnen des Strompfades (3) ein erster Thyristor (T1) gezündet wird und wobei zum Schließen des Strompfades (3) ein zweiter Thyristor (T2) gezündet wird, der den Stromfluss durch den ersten Thyristor (T1) unterbindet.

## Claims

1. Circuitry with a rectifier (GR) with a power supply side (AC) and a rectifier voltage side (DC) with a positive path (1) and a second negative path (2) which each have a connection between which a load can be connected and can be fed with a rectifier voltage (Ugr) produced by the rectifier (GR), wherein a first switch (T1) is provided between the paths (1;2) in series with a parallel circuit comprising a first capacitor (CL) and a resistor (R1), so that the first capacitor (CL) is charged when switching on the first switch (T1) and is discharged via the resistor (R1), wherein a control (S) is provided for the first switch (T1) which switches on the first switch (T1) when the rectifier voltage (Ugr) reaches or exceeds a first predetermined upper value (UL) and switches off the first switch (T1) when the rectifier voltage (Ugr) reaches or falls short of a second predetermined lower value or when a predetermined time interval (Dt) has passed after the switch-on, wherein the first switch (T1) is a first thyristor, whose anode is connected to the positive path (1) and whose cathode is connected via the parallel circuit of the first capacitor (CL) and the resistor (R1) to the negative path (2), **characterised in that** a second capacitor (Ck) and a second switch (T2) are switched in series parallel to the first switch (T1) wherein the second switch (T2) is switched for switching off the first switch (T).

2. Circuitry according to claim 1
**characterised in that**
the first and/or second switch can be switched by way of the control (S).

3. Circuitry according to one of claims 1 or 2
**characterised in that**
the second switch (T2) is a second thyristor whose anode is connected to the second capacitor (Ck).

4. Method for limiting the rectifier voltage (Ugr) generated by a rectifier (GR) on its d.c. voltage side (DC), with the following steps:
- detecting the rectifier voltage (Ugr);
- comparing the rectifier voltage (Ugr) with a predetermined voltage value (UL);
- opening a current path (3) which is connecting the positive path (1) and the negative path (2) on the d.c. voltage side (DC) if the rectifier voltage (Ugr) corresponds to the predetermined value or exceeds this value, whereby a capacitor (CL) switched into the opened current path (3) is charged up to the rectifier voltage (Ugr) and is discharged immediately via a bleeder resistor (R1),
- closing the opened current path (3) when the rectifier voltage (Ugr) reaches or falls short of a second predetermined lower value or when after the opening of the current path (3) a predetermined time interval (Dt) has passed, wherein for opening the current path (3) a first thyristor (T1) is triggered and wherein for closing the current path (3) a second thyristor (T2) is triggered, which stops the current flow through the first thyristor (T1).

## Revendications

1. Circuit qui comprend un redresseur (GR), avec un côté d'alimentation (AC) et un côté de tension continue (DC), avec une ligne positive (1) et une deuxième ligne négative (2), qui présentent chacune un raccord, entre lesquels une charge peut être branchée, et qui peut être alimentée avec une tension de redresseur (Ugr) générée par le redresseur (GR), sachant qu'entre les deux lignes (1 ; 2) est prévu un premier commutateur (T1) en série avec un circuit parallèle consistant en un premier condensateur (CL) et une résistance (R1), de telle manière que le premier condensateur (CL) soit chargé quand le premier commutateur (T1) est conducteur et est déchargé par l'intermédiaire de la résistance (R1), sachant que, pour le premier commutateur (T1), est prévue une commande (S), qui rend ledit premier commutateur (T1) conducteur quand la tension de redresseur (Ugr) atteint ou dépasse vers le haut une première valeur prédéterminée, supérieure (UL) et rend le premier commutateur (T1) non conducteur quand la tension de redresseur (Ugr) atteint ou descend au-dessous d'une deuxième valeur prédéterminée, inférieure, ou si un laps de temps prédéterminé (Dt) s'est écoulé après la mise en circuit, sachant que le premier commutateur (T1) est un thyristor, dont l'anode est reliée à la ligne positive (1) et dont la cathode est reliée à la ligne négative (2) par l'intermédiaire du circuit parallèle constitué par le premier condensateur (CL) et la résistance (R1),
**caractérisé en ce que**
un deuxième condensateur (Ck) et un deuxième commutateur (T2) en série sont branchés en parallèle sur le premier commutateur (T1), sachant que le deuxième commutateur (T2) sert à déconnecter le deuxième commutateur (T1).

2. Circuit selon la revendication 1,
**caractérisé en ce que**
le premier ou/et le deuxième commutateur peut / peuvent être commuté/s par l'intermédiaire de la commande (S).

3. Circuit selon revendication 1 ou 2,
**caractérisé en ce que**
le deuxième commutateur (T2) est un deuxième thyristor dont l'anode est reliée au deuxième condensateur (Ck).

4. Procédé de limitation de la tension de redresseur (Ugr), générée par un redresseur (GR), sur son côté de tension continue (DC), comprenant les étapes suivantes:
- Saisie de la tension de redresseur (Ugr),
- comparaison de la tension de redresseur (Ugr) par rapport à une valeur de tension prédéterminée (UL),
- ouverture d'une ligne de courant (3), qui relie la ligne positive (1) et la ligne négative (2) sur le côté de tension continue (DC), si la tension de redresseur (Ugr) correspond à la valeur prédéterminée ou est supérieure à celle-ci, ce en raison de quoi un condensateur (CL), branché sur la ligne de courant (3) ouverte, est chargé jusqu'à la tension de redresseur (Ugr) et, de même, déchargé par l'intermédiaire d'une résistance (R1),
- fermeture de la ligne de courant (3) ouverte, si la tension de redresseur (Ugr) atteint une deuxième valeur prédéterminée, inférieure ou descend au-dessous de celle-ci, ou si, après l'ouverture de la ligne de courant (3), un laps de temps prédéterminé (Dt) s'est écoulé, sachant que, pour ouvrir la ligne de courant (3), un premier thyristor (T1) est allumé, et sachant que, pour fermer la ligne de courant (3), un deuxième thyristor (T2) est allumé, lequel interrompt le passage du courant à travers le premier thyristor (T1).
